Europäisches Patentamt

European Patent Office

Office européen des brevets

(19)

(11) Publication number: **0 238 552 B1**

(12) EUROPEAN PATENT SPECIFICATION

(45) Date of publication of patent specification: 27.12.91  (51) Int. Cl.⁵: **B01F 3/04**

(21) Application number: 86905628.3

(22) Date of filing: 05.09.86

(86) International application number:
PCT/US86/01835

(87) International publication number:
WO 87/01302 (12.03.87 87/06)

The file contains technical information submitted
after the application was filed and not included in
this specification

(54) TOWER PACKING ELEMENT.

(30) Priority: 05.09.85 US 772843

(43) Date of publication of application:
30.09.87 Bulletin 87/40

(45) Publication of the grant of the patent:
27.12.91 Bulletin 91/52

(84) Designated Contracting States:
AT BE CH DE FR GB IT LI LU NL SE

(56) References cited:
US-A- 3 415 502      US-A- 3 618 778
US-A- 3 801 419      US-A- 3 887 664
US-A- 4 052 491      US-A- 4 296 050
US-A- 4 385 012

(73) Proprietor: NORTON COMPANY
1 New Bond Street
Worcester Massachusetts 01606(US)

(72) Inventor: HSIA, Min Alexander
5800 Leedale, No. 22
Houston, TX 77016(US)

(74) Representative: Zumstein, Fritz, Dr. et al
Dr. F. Zumstein Dr. E. Assmann Dipl.-Ing. F.
Klingseisen Bräuhausstrasse 4
W-8000 München 2(DE)

## Description

The invention relates to a packing element for an exchange column comprised of a plurality of preformed perforated vertical sheets designed for low pressure drop for mass transfer columns, distillation, and liquid-gas contact apparatus.

Heretofore packing elements have been constructed of a number of corrugated sheets arranged so that the corrugation and channels of adjacent sheets are inclined, cross one another, and extend in opposite directions. In some instances the sheets are perforated and the surfaces textured, fluted, or roughened in various patterns to promote a more uniform distribution of the flow over the surfaces. Examples of such prior art packings are disclosed in U.S. Patents 3,415,502; 3,599,543, 4,186,159, and 4,296,050. However, such prior art packing elements are not as efficient in energy conservation and/or mass transfer as the invention to be presented here.

In accordance with the present invention there is provided a packing element for an exchange column comprising a plurality of preformed sheets situated adjacent one another and a plurality of inclined rows of elongated inclined troughs with alternating, elongated inclined valleys and elongated inclined ridges in the same row characterized by the fact that said rows of valleys and ridges are on opposite front and back sides of each preformed sheet, said inclined rows on a side adjacent one said sheet of the packing element being disposed at an angle opposite and in criss-crossing relation to the inclined rows of the inclined troughs, alternating valleys and ridges of said adjacent sheet of the packing element, an upper edge extending about an inlet to each trough, and a lower drip edge extending about an outlet end of each trough and disposed adjacent the upper edge and inlet of an adjacent lower trough on the opposite side of the sheet and in the same inclined row. Each sheet has, when viewed from one side, vertically aligned rows of the troughs with inclined ridges between vertically aligned rows of inclined valleys.

Thus, liquid flows over the inclined surfaces and drips from the lower drip edges on the ridges, and changes direction frequently when it lands upon the inclined surfaces of lower opposite inclined valleys or ridges on both sides of the same and adjacent sheets.

A packing element of predetermined thickness is constructed of a number of identical sheets arranged so that the odd numbered (1, 3, 5, 7, etc.) sheets have the parallel rows inclined in the same direction and spaced by the even numbered (2, 4, 6, 8, etc.) sheets, rotated such that the parallel rows are inclined in the same opposite direction and cross the inclined rows of the adjacent odd numbered sheets. Thus, the direction of the liquid flow on the inclined surfaces of either the valleys or ridges changes frequently and is uniformly distributed by the drip edges in various directions over the same sheet and over surfaces of the adjacent sheet during its free travel downwardly over both sides of the sheets.

## BRIEF DESCRIPTION OF THE DRAWINGS

Figure 1 is a front view of the assembled packing element with a portion of the first or odd numbered sheet broken away to show a portion of and arrangement of the second or even numbered sheet of the packing element;

Figure 2 is a partial top view of the packing element of Figure 1;

Figure 3 is a sectional view through three layers of the packing element taken on line 3-3 of Figure 1 and Figure 4;

Figure 4 is an angular top view of the inclined rows of troughs in three layers of the packing element of Figure 1;

Figure 5 is a left hand side view of the first and second layer and other adjacent pairs of layers of the packing element of Figure 1, and;

Figure 6 is a right hand side view of the first layer and every odd numbered layer of the packing element of Figure 1.

## DESCRIPTION OF THE PREFERRED EMBODIMENT

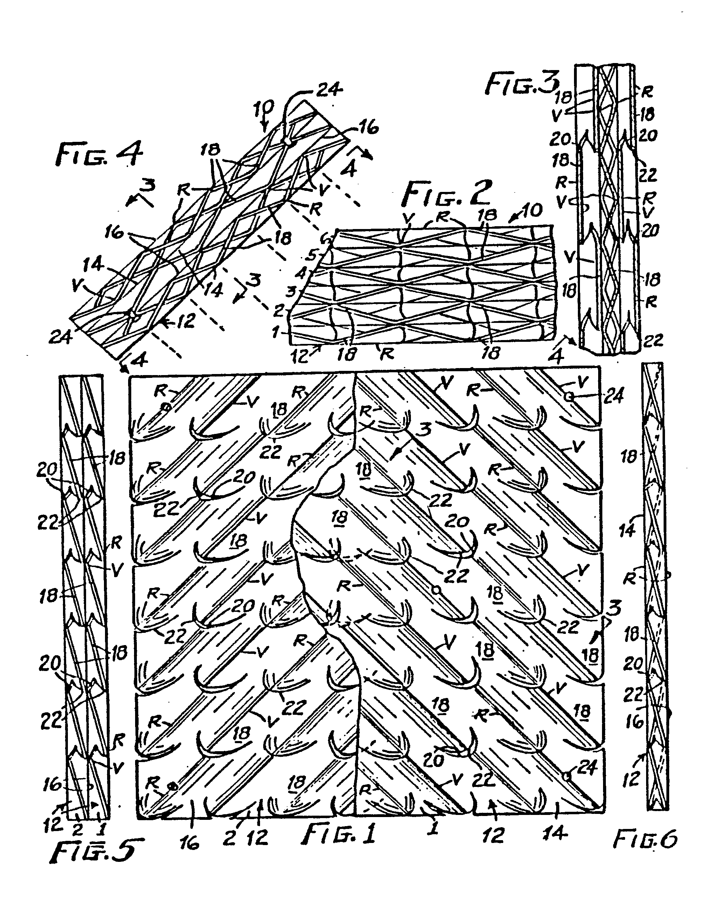

Referring to Figures 1 and 2, a typical packing element 10 is shown, made to predetermined desired thickness, height, and width or diameter, by coiling or assembling a number of layers of the identical preformed sheets 12 together in an alternating manner. Each preformed sheet or layer 12 has a front side 14 and an opposite back side 16. Projecting alternately along the rows from opposite front and back sides 14 and 16 are a plurality of elongated inclined V-shape troughs 18 of substantially identical size and shape. Each of the troughs 18 have outer inclined trickle surfaces converging to and defining an elongated inclined ridge R and inner inclined surfaces converging to the elongated floor or bottom of and defining an elongated inclined Valley V opposite the ridge R. Hence, each of the adjacent horizontal and inclined rows of elongated inclined V-shape troughs 18 has alternating inclined ridges and valleys on each of the sides 14 and 16 and median plane of the sheet, layer, or plate 12 of the packing element 10. The elongated inclined V-shape troughs 18 are provided with upper concave edges 20 about an entrance or inlet to the valleys V and longitudinally projecting lower convex drip edges 22 about lower outlet ends thereof. The upper edge 20 and the lower drip edges 22 of adjacent V-shape portions in the inclined rows are of substantially the same complimentary shape and depth. Each pair of adjacent upper and lower edges 20 and 22 extend from lower midpoints thereof and upwardly along both sides of the ridges and valleys to opposite upper ends that converge at junctions located between adjacent ridges and valleys and near the median plane of the sheet 12.

Alternatively, the cross-sectional shape of the inclined troughs 18 may be in the form of a circular segment with curved surfaces, curved valleys and ridges, or a combination of straight sides, diverging from a narrow flat or arcuate apex or ridge. Also the upper curved edges 20 and lower drip 22 maybe V-shaped or have serrated straight or curved edges.

It can also be seen that the elongated inclined V-shape troughs 18 are arranged on the sheet in adjacent vertical, horizontal and inclined rows and that the lowest point of the upper edges 20 and drip edges 22 lie on a single plane and at the intersection of the three horizontal, inclined and vertical planes.

The sheets 12 of V-packing element 10 are preferably preformed to identical size and shape and assembled so that every other sheet is turned from side to side 180° so the backside 16 of adjacent sheets are together back to back. Thus, the elongated moderately inclined V-shape troughs 18, ridges and valleys, are oppositely inclined and cross those of the adjacent sheet, while the upper edges 20 and lower drip edges 22 remain substantially at the same height and horizontal plane as those of the adjacent sheet or layer.

The assembled sheets 12 may be fastened together by either banding the entire assembly or, preferably, by fastening adjacent sheets together with conventional screws, bolts, or rivets 24 at several places where the oppositely inclined elongated ridges of adjacent sheets contact and cross one another at approximately a 90° angle.

As a result the adjacent sheets contact one another only at the crossing mid-points of the ridges R which now face each other and define the back sides 16 of the sheets and thereby provide horizontal rows of facing criss-crossing valleys V between the facing criss-crossing ridges R and alternating vertical rows of the facing criss-crossing ridges R and valleys V between adjacent sheets.

Typically, the inclined rows of the troughs 18 are inclined from 30° to 60° but preferrably 45° and spaced about 1" (2.54cm) apart. The elongated troughs have a length of about 1-3/4" (4.44cm) along the ridge between the upper and lower drip edges and a depth of about .394" (1 cm) between the ridge and valley of adjacent troughs 18.

The sheets may be molded of plastic material but are preferably made by conventionally die stamping out an initially thin flat sheet of a metal such as copper, stainless steel, or monel metal carbon steel, aluminum .010 to .050 (.254 to 1.27 mm) thick with either smooth, fluted, dimpled or textured surfaces. Depending upon the thickness of each sheet 12 a typical packing element 10 will comprise anywhere from 10-40 sheets or layers 12 and a height and width which allows it to be inserted through the conventional 46 x 46 cm (18" x 18") manway in the column or tower wall.

In operation the liquid is distributed over and flows downwardly over both sides of each sheet of the packing 10 while the gas or exchange medium flows upwardly and makes contact and exchange with the liquid on the surfaces wetted by the liquid. The liquid flows over the inclined surface, ridges, and from the drip edges on both sides of the sheet, and is frequently caused to change direction onto surfaces of the same or adjacent sheets. Thus, the liquid flow is frequently diverted and more uniformly distributed on the surfaces of the sheet and has a surprisingly lower pressure drop.

It is obvious that the size, and shape of the sheets and troughs, angles of inclination of the rows of inclined troughs, and arrangement of the sheets and troughs relative to those of adjacent sheets of the packing element can be varied to suit different applications.

For example, the angle of inclination of the inclined rows may vary from those of adjacent sheets, may criss cross the inclined rows of adjacent sheets at angles other than 90°, the upper and lower drip edges of adjacent sheets can be located at different heights and in different planes. Also, the longitudinal length of the elongated inclined troughs, ridges and valley may be varied from sheet to sheet or in different horizontal rows and inclined rows of the same sheet.

A comparison was made between the packing of the invention and the state-of-the-art corrugated-sheet type packing with textured surface, which is commercially available at this time.

The test was conducted under the same conditions in a 15" (38.1 cm) diameter distillation tower packed to a depth of 10 ft. (3.048 m). A mixture of Isooctane and Toluene was fed into the packing at a pressure of 13300 Pa (100 mm of mercury).

The results of the test indicate that the packing of the invention had a desired lower pressure drop per theoretical plate of 25% or better, and 25% greater maximum capacity than the state-of-the-art corrugated-sheet type packing with textured surface.

## Claims

1. A packing element for an exchange column comprising a plurality of preformed sheets situated adjacent one another and a plurality of inclined rows of elongated inclined troughs with alternating, elongated inclined valleys and elongated inclined ridges in the same row characterized by the fact that said rows of valleys and ridges are on opposite front (14) and back (16) sides of each preformed sheet (12), said inclined rows on a side adjacent one said sheet of the packing element being disposed at an angle opposite and in criss-crossing relation to the inclined rows of the inclined troughs, alternating valleys and ridges of said adjacent sheet (12) of the packing element, an upper edge (20) extending about an inlet to each trough, and a lower drip edge (22) extending about an outlet end of each trough (18) and disposed adjacent the upper edge (20) and inlet of an adjacent lower trough (18) on the opposite side of the sheet and in the same inclined row.

2. A packing element according to claim 1, wherein each of the elongated inclined troughs have inclined converging surfaces with an elongated valley on one side and an elongated ridge on an opposite side of the trough extending longitudinally in a single inclined plane between the upper edge (20) and the lower drip edge (22).

3. A packing element according to claim 1, wherein the upper edge (20) and lower drip edge (22) each have a low point from which they extend upwardly along the shape of the trough to high points on opposite sides of the inclined ridge.

4. A packing element according to claim 3, wherein the upper edge (20) and the lower drip edge (22) are curved.

5. A packing element according to claim 3 or 4, wherein the low points of the lower drip edges on each of the inclined troughs in each inclined row of each sheet of the packing element are situated substantially at the intersection of inclined, horizontal and vertical planes.

6. A packing element according to claim 1, wherein the inclined troughs are also arranged in a plurality of adjacent horizontal rows with valleys and ridges thereof alternating across each side of the sheet and with the lower drip edges of the inclined troughs in each horizontal row substantially aligned and lying in a single substantially horizontal plane.

7. A packing element according to claim 1, wherein the inclined troughs are also arranged in vertical rows on each side of the sheet and with the lower drip edges of each of the inclined troughs in each vertical row substantially aligned and lying in a single substantially vertical plane.

8. A packing element according to claim 1, wherein the inclined rows of elongated inclined troughs are generally parallel to one another and inclined at an angle of from 30 to 60 degrees from a horizontal plane.

9. A packing element according to claim 1, wherein the inclined ridges of the troughs in each of the inclined rows lie in substantially the same incline plane.

10. A packing element according to claim 1, wherein the troughs on both opposite sides of the sheet are of substantially identical size and shape and protrude outwardly substantially the same depth from a median plane of the sheet.

11. A packing element according to claim 1, wherein the lower drip edge of one trough and the upper edge of an other adjacent trough in the same incline row extend inwardly from the ridges on opposite sides of the sheet, converge toward and join one another at high points located on opposite sides of the sheet and near a median plane of the sheet.

12. A packing element according to claim 1, wherein each preformed sheet (12) of the packing element is formed from sheet metal of copper, aluminum, stainless steel, carbon steel monel metal, or an alloy of one or more of said metals.

13. A packing element according to claim 1, which includes fastening means for holding the sheets together.

## Revendications

1. Elément de garniture de colonne d'échange comprenant plusieurs feuilles préformées disposées de manière contiguë et plusieurs rangées inclinées de plateaux allongés inclinés comprenant alternativement des vallées inclinées allongées et des arêtes inclinées allongées dans la même rangée caractérisé par le fait que lesdites rangées de vallées et d'arêtes sont disposées sur les faces opposées frontale (14) et dorsale (16) de chaque feuille préformée (12), lesdites rangées inclinées sur une face adjacente d'une dite feuille de l'élément de garniture étant disposées sous un angle opposé et en position entrecroisée par rapport aux rangées inclinées des plateaux inclinés, en alternant les vallées et les arêtes de ladite feuille adjacente (12) de l'élément de garniture, un bord supérieur (20) s'étendant à proximité d'une entrée de chaque plateau, et un bord d'égouttage inférieur (22) s'étendant à une extrémité de sortie de chaque plateau (18) et disposé de manière contiguë au bord supérieur (20) et l'entrée d'un plateau (18) inférieur adjacent du côté opposé de la feuille et dans la même rangée inclinée.

2. Elément de garniture selon la revendication 1, dans lequel chacun des plateaux inclinés allongés a des surfaces convergentes inclinées avec une vallée allongée de chaque côté et une arête allongée de chaque côté et une arête allongée sur une face opposée du plateau s'étendant longitudinalement dans un seul plan incliné entre le bord supérieur (20) et le bord inférieur d'égouttage (22).

3. Elément de garniture selon la revendication 1, dans lequel le bord supérieur (20), et le bord d'égouttage inférieur (22) ont chacun un point bas d'où ils s'étendent vers le haut le long de la forme du plateau vers des points surélevés sur les faces opposées de l'arête inclinée.

4. Elément de garniture selon la revendication 3, dans lequel le bord supérieur (20) et le bord inférieur d'égouttage (22) sont incurvés.

5. Elément de garniture selon la revendication 3 ou 4 dans lequel les points bas des bords inférieurs d'égouttage sur chacun des plateaux inclinés dans chaque rangée inclinée de l'élément de garniture sont placés sensiblement à l'intersection de plans inclinés, horizontaux et verticaux.

6. Elément de garniture selon la revendication 1, dans lequel les plateaux inclinés sont aussi disposés dans plusieurs rangées horizontales adjacentes avec leurs vallées et leurs arêtes alternant à travers chaque face de la feuille et les bords d'égouttage inférieurs des plateaux inclinés dans chaque rangée horizontale étant sensiblement alignés et se trouvant dans un seul plan sensiblement horizontal.

7. Elément de garniture selon la revendication 1, dans lequel les plateaux inclinés sont aussi disposés en rangées verticales de chaque côté de la feuille, et avec les bords d'égouttage inférieurs de chacun des plateaux inclinés alignés sensiblement dans chaque rangée verticale et se trouvant dans un seul plan sensiblement vertical.

8. Elément de garniture selon la revendication 1, dans lequel les rangées inclinées des plateaux allongés inclinés sont généralement parallèles l'un à l'autre et inclinés selon un angle compris entre 30 et 60 degrés par rapport à l'horizontale.

9. Elément de garniture selon la revendication 1, dans lequel les arêtes inclinées des plateaux dans chacune des rangées inclinées se situe dans sensiblement le même plan incliné.

10. Elément de garniture selon la revendication 1, dans lequel les plateaux sur les deux faces opposées de la feuille sont sensiblement de forme et de dimension identiques et ressortent vers l'extérieur avec sensiblement le même relief par rapport au plan médian de la feuille.

11. Elément de garniture selon la revendication 1, dans lequel le bord d'égouttage inférieur d'un plateau et le bord supérieur d'un autre plateau adjacent dans la même rangée inclinée s'étendent vers l'intérieur depuis les arêtes des faces opposées de la feuille, convergent l'un vers l'autre et se rejoignent en ces points surélevés sur les faces opposées de la feuille et à proximité du plan médian de la feuille.

12. Elément de garniture selon la revendication 1, dans lequel chaque feuille (12) préformée de l'élément de garniture est formé de feuille métallique de cuivre, aluminium, acier inoxydable, acier au carbone, monel ou d'un alliage d'un ou plusieurs desdits métaux.

13. Elément de garniture selon la revendication 1 qui comprend des moyens de fixation pour maintenir ensemble les feuilles.

**Patentansprüche**

1. Element für eine Austauschkolonnenpackung umfassend eine Vielzahl von vorgeformten Plattenelementen, die benachbart zueinander angeordnet sind und eine Vielzahl von geneigten Reihen von länglichen geneigten Mulden mit abwechselnden länglichen geneigten Tälern und länglichen geneigten Vorsprüngen in derselben Reihe umfaßt,

dadurch gekennzeichnet,

daß die Reihen der Täler und Vorsprünge auf gegenüberliegender Vorder-(14) und Rückseite (16) eines jeden vorgeformten Plattenelements (12) ausgebildet sind, wobei die geneigten Reihen auf einer Seite benachbart zu einem der Plattenelemente des Packungselements in einer Winkelstellung angeordnet sind, gegenüber und in kreuz- und querlaufender Beziehung zu den geneigten Reihen der geneigten Mulden sind, wobei abwechselnde Täler und Vorsprünge der benachbarten Plattenelemente (12) des Packungselements an einer Oberkante (20), die sich über einen Einlaß zu jeder Mulde erstreckt, und einer unteren Abtropfkante (22), die sich über ein Auslaßende jeder Mulde (18) erstreckt und benachbart zu der Oberkante (20) und dem Einlaß einer benachbarten unteren Mulde (18) auf der gegenüberliegenden Seite des Plattenelementes und in derselben geneigten Reihe angeordnet ist.

2. Element nach Anspruch 1,
wobei jede der länglichen geneigten Mulden geneigte konvergierende Oberflächen mit länglichen Tälern auf einer Seite und länglichen Vorsprüngen auf der anderen Seite der Mulden hat, die sich längs in einer einzigen geneigten Fläche zwischen der Oberkante (20) und der unteren Abtropfkante (22) erstreckt.

3. Element nach Anspruch 1,
wobei die Oberkante (20) und die untere Abtropfkante (22) jeweils einen unteren Punkt haben, von dem sie sich nach oben längs der Form der Mulde zu den oberen Punkten auf der gegenüberliegenden Seite der geneigten Vorsprünge erstrecken.

4. Element nach Anspruch 3,
wobei die Oberkante (20) und die untere Abtropfkante (22) gekrümmt sind.

5. Element nach Anspruch 3 oder 4,
wobei die unteren Punkte der unteren Abtropfkanten auf jeder der geneigten Mulden in jeder geneigten Reihe jedes Plattenelements des Packungselements im wesentlichen an den Schnittpunkten der geneigten, horizontalen und vertikalen Flächen angeordnet sind.

6. Element nach Anspruch 1,
wobei die geneigten Mulden auch in einer Vielzahl von benachbarten horizontalen Reihen mit Tälern und Vorsprüngen, davon abwechselnd quer über jede Seite des Plattenelements angeodnet sind und mit den unteren Abtropfkanten der geneigten Mulden in jede horizontale Reihe im wesentlichen ausgerichtet sind und in einer einzigen im wesentlichen horizontalen Ebene liegen.

7. Element nach Anspruch 1,
wobei die geneigten Mulden auch in vertikalen Reihen auf jeder Seite des Plattenelements angeordnet sind und mit den unteren Abtropfkanten einer jeden der geneigten Mulden in jeder vertikalen Reihe im wesentlichen ausgerichtet sind und in einer einzigen im wesentlichen vertikalen Ebene liegen.

8. Element nach Anspruch 1,
wobei die geneigten Reihen der länglichen geneigten Mulden im allgemeinen parallel zueinander und um einen Winkel von 30° bis 60° von der horizontalen Ebene geneigt sind.

9. Element nach Anspruch 1,
wobei die geneigten Vorsprünge der Mulden in jeder der geneigten Reihen im wesentlichen in derselben geneigten Ebene liegen.

10. Element nach Anspruch 1,
wobei die Mulden auf beiden gegenüberliegenden Seiten der Plattenelemente von im wesentlichen identischer Größe und Form sind und nach außen im wesentlichen in derselben Tiefe von einer mittigen Ebene der Platte vorstehen.

11. Element nach Anspruch 1,
wobei sich die untere Abtropfkante einer Mulde und die obere Kante einer anderen benachbarten Mulde in derselben geneigten Reihe nach innen von den Vorsprüngen auf den gegenüberliegenden Seiten des Plattenelements erstrecken, zueinander konvergieren und sich an den oberen Punkten, die auf den gegenüberliegenden Seiten der Plattenelemente und nahe an einer mittleren Ebene des Plattenelements angeordnet sind, treffen.

12. Element nach Anspruch 1, wobei jedes vorgeformte Plattenelement (12) des Packungselements aus einem Blech aus Kupfer, Aluminium, rostfreiem Stahl, Kohlenstoffstahl, Monelmetall oder einer Legierung aus einem oder mehreren dieser Metalle ausgebildet ist.

13. Element nach Anspruch 1,
das Befestigungseinrichtungen zum Halten der Plattenelemente aneinander umfaßt.

EP 0 238 552 B1

FIG. 3

FIG. 4

FIG. 2

FIG. 5

FIG. 1

FIG. 6

7